(19) Europäisches Patentamt
European Patent Office
Office européen des brevets

(11) **EP 4 629 349 A1**

(12) **EUROPEAN PATENT APPLICATION**
published in accordance with Art. 153(4) EPC

(43) Date of publication:
**08.10.2025 Bulletin 2025/41**

(21) Application number: **24753131.2**

(22) Date of filing: **24.01.2024**

(51) International Patent Classification (IPC):
*H01M 4/68* (2006.01)    *H01M 50/489* (2021.01)

(52) Cooperative Patent Classification (CPC):
**H01M 4/68; H01M 50/489**

(86) International application number:
**PCT/JP2024/002060**

(87) International publication number:
**WO 2024/166686 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2023 JP 2023017873**

(71) Applicant: **GS Yuasa International Ltd.
Kisshoin, Minami-ku,
Kyoto-shi, Kyoto 601-8520 (JP)**

(72) Inventors:
• **ONODA, Shingoro
Kosai-shi, Shizuoka 431-0452 (JP)**
• **ANDO, Kazunari
Kosai-shi, Shizuoka 431-0452 (JP)**
• **YOSHIDA, Toshihiro
Kosai-shi, Shizuoka 431-0452 (JP)**
• **AOYANAGI, Kiyomi
Kosai-shi, Shizuoka 431-0452 (JP)**
• **ITO, Etsuko
Kosai-shi, Shizuoka 431-0452 (JP)**

(74) Representative: **Isarpatent
Patent- und Rechtsanwälte
Barth Hassa Peckmann & Partner mbB
Friedrichstraße 31
80801 München (DE)**

(54) **LEAD ALLOY FOR LEAD ACID STORAGE BATTERIES, AND LEAD ACID STORAGE BATTERY**

(57)    In a lead alloy for a lead-acid battery, an X-ray diffraction spectrum of the lead alloy includes a diffraction peak A, a diffraction peak B, and a diffraction peak C, a peak C intensity ratio is 10% or more, the peak C intensity ratio being represented by "peak C intensity ratio (%) = $100 \times$ intensity value of the diffraction peak C/(intensity value of the diffraction peak A + intensity value of the diffraction peak B + intensity value of the diffraction peak C)", and the diffraction peak A is assigned to a (111) plane, the diffraction peak B is assigned to a (200) plane, and the diffraction peak C is assigned to a (220) plane.

Fig. 3

Pb-Sn-Ca-Na-Bi alloy (A10)

2Θ(deg.)

EP 4 629 349 A1

## Description

TECHNICAL FIELD

The present invention relates to a lead alloy for a lead-acid battery and a lead-acid battery.

BACKGROUND ART

Patent Document 1 proposes "an expanded grid of a lead-acid battery using a lead alloy containing 0.05 to 0.09% by weight of calcium (Ca), 0.40 to 2.00% by weight of tin (Sn), 0.05 to 0.10% by weight of sodium (Na), and the balance lead (Pb)".

Patent Document 2 proposes an invention in which, "by using an expanded grid as a positive electrode grid that holds an active material of a positive electrode plate, and producing the grid with an alloy obtained by incorporating an alkali metal such as Li, Na, or K into a lead-calcium-tin alloy at a content of 0.001 to 0.03% by weight, adhesion between an oxide layer formed on a surface of the positive electrode grid and the positive electrode grid is improved, thereby preventing falling off and peeling of the active material and preventing shortening of a life of a battery due to rapid degradation of a battery capacity when the battery is being used".

Patent Document 3 proposes an invention in which, "in a current collector for a positive electrode of a lead-acid battery produced by rolling of lead powder or lead-based alloy powder and having a structure composed of crystal grains with an aspect ratio of 3 to 13 that are oriented in a specific direction, a structure obtained by rolling the lead powder or the lead-based alloy powder mixed with sodium sulfate is present on a surface layer of early current collector, and the amount of the sodium sulfate added is 0.5% or more and 5.0% or less with respect to the lead powder or the lead alloy powder to be mixed".

Patent Document 4 proposes "a lead acid battery including a positive current collector for a lead-acid battery, including, on at least a part of a surface of a substrate, a surface layer which has an alloy composition different from that of the substrate, in which the substrate is a Sb-free lead alloy or lead, the surface layer is a Sb-free lead alloy layer containing one or more metals selected from alkali metals (excluding lithium) and alkaline earth metals, and in a case where the surface layer contains Ca, the content of Ca is 0.2 to 5 wt%, or in a case where the surface layer contains one or more metals selected from alkali metals and alkaline earth metals, excluding lithium and Ca, the content of the metal is 0.1 to 5 wt%".

PRIOR ART DOCUMENT

PATENT DOCUMENTS

Patent Document 1: JP 3036235
Patent Document 2: JP-A-11-176449
Patent Document 3: JP-A-2009-199846
Patent Document 4: JP 5050309

SUMMARY OF THE INVENTION

PROBLEMS TO BE SOLVED BY THE INVENTION

As shown in Patent Documents 1 to 4, alloys having various compositions have been proposed as lead alloys for a lead-acid battery. A lead-acid battery is often in an overcharge state from the viewpoint of suppressing stratification of an electrolyte solution, suppressing sulfation of a plate, or the like. When the overcharging is repeated, corrosion of a current collector proceeds, and the plate is curved. The curving of the plate may promote falling off of the electrode material, eventually causing the lead-acid battery to reach the end of life. In particular, corrosion of the positive current collector is likely to proceed.

One of typical applications of lead-acid batteries is automobile applications. In recent years, there are more chances that automobiles are caught in traffic congestion or are constantly used as in the cases of commercial vehicles, causing the exposure of the lead-acid battery to an overcharge state. With the global warming, the lead-acid batteries are being used more frequently in higher temperature environments during summer. Thus, in recent years, a higher level of high-temperature overcharge life performance has been demanded in the lead-acid battery than in conventional lead-acid batteries. In order to improve the life even under such a severe use environment, it is required that corrosion resistance is enhanced by further improving the conventional lead alloy.

MEANS FOR SOLVING THE PROBLEMS

An aspect of the present disclosure relates to a lead alloy for a lead-acid battery, in which an X-ray diffraction spectrum of the lead alloy includes a diffraction peak A, a diffraction peak B, and a diffraction peak C, a peak C intensity ratio is 10% or more, the peak C intensity ratio being represented by "peak C intensity ratio (%) = 100 × intensity value of the diffraction peak C/(intensity value of the diffraction peak A + intensity value of the diffraction peak B + intensity value of the diffraction peak C)", and the diffraction peak A is assigned to a (111) plane, the diffraction peak B is assigned to a (200) plane, and the diffraction peak C is assigned to a (220) plane.

ADVANTAGES OF THE INVENTION

According to the present disclosure, a lead alloy for a lead-acid battery having excellent corrosion resistance can be provided.

BRIEF DESCRIPTION OF THE DRAWINGS

Fig. 1 is a partially cutaway perspective view showing an appearance and an internal structure of a lead-acid battery according to an embodiment of the present invention.
Fig. 2 is an XRD spectrum of a Pb-Sn-Ca-Bi alloy.
Fig. 3 is an XRD spectrum of a Pb-Sn-Ca-Na-Bi alloy.

MODE FOR CARRYING OUT THE INVENTION

Hereinafter, embodiments of the present disclosure will be described with reference to examples, but the present disclosure is not limited to the examples described below. In the following description, specific numerical values and materials may be presented as examples, but other numerical values and other materials may be used as long as the effects of the present disclosure are obtained. In this specification, the phrase "numerical value A to numerical value B" encompasses the numerical value A and the numerical value B, and can be read as "numerical value A or more and numerical value B or less". In the following description, when the lower limits and the upper limits of numerical values related to a specific physical property, a specific condition, or the like are presented as examples, any of the lower limits presented as examples and any of the upper limits presented as examples can be arbitrarily combined as long as the lower limit is not equal to or more than the upper limit. When a plurality of materials is presented as examples, one of the materials may be selected and used singly, or two or more of the materials may be used in combination.
The present disclosure encompasses a combination of matters recited in two or more claims voluntarily selected from a plurality of claims recited in the appended claims. That is, as long as no technical contradiction arises, matters recited in two or more claims voluntarily selected from a plurality of claims recited in the appended claims can be combined.

(1) An X-ray diffraction spectrum of a lead alloy for a lead-acid battery according to an embodiment of the present disclosure includes a diffraction peak A, a diffraction peak B, and a diffraction peak C, a peak C intensity ratio is 10% or more, the peak C intensity ratio being represented by peak C intensity ratio (%) = 100 × intensity value of the diffraction peak C/(intensity value of the diffraction peak A + intensity value of the diffraction peak B + intensity value of the diffraction peak C), and the diffraction peak A is assigned to a (111) plane, the diffraction peak B is assigned to a (200) plane, and the diffraction peak C is assigned to a (220) plane. The lead alloy for a lead-acid battery according to (1) has excellent corrosion resistance.

(2) In the lead alloy according to (1), when a CuKα ray is used as an X-ray source in the measurement of the X-ray diffraction spectrum of the lead alloy, the diffraction peak A appears, for example, at $2\theta = 31.12°$ to $31.42°$, the diffraction peak B appears, for example, at $2\theta = 36.11°$ to $36.41°$, and the diffraction peak C appears, for example, at $2\theta = 52.07°$ to $52.37°$.

(3) In the lead alloy according to (1) or (2), the lead alloy may contain Na and Bi. In this case, the peak C intensity ratio can be easily set to 10% or more by generating a NaBi intermetallic compound in the lead alloy.

(4) In the lead alloy according to any one of (1) to (3), a content $C_{Na}$ of Na may be 0.001% by mass or more and 0.03% by mass or less. This allows the corrosion resistance to be more significantly improved.

(5) In the lead alloy according to any one of (1) to (4), a content $C_{Bi}$ of Bi may be 0.001% by mass or more and 0.05% by mass or less. This allows the corrosion resistance to be more significantly improved.

(6) In the lead alloy according to any one of (1) to (5), a ratio of the content $C_{Bi}$ of Bi to the content $C_{Na}$ of Na contained in the lead alloy: $C_{Bi}/C_{Na}$ is 6 or more and 12 or less. In this case, the BiNa intermetallic compound can be efficiently produced in the lead alloy with small amounts of Bi and Na, and the corrosion resistance can be efficiently improved.

(7) The lead alloy according to any one of (1) to (6) may contain Sn, and a content $C_{Sn}$ of Sn contained in the lead alloy may be 1.5% by mass or more and 2.5% by mass or less. Sn can improve the corrosion resistance of the lead alloy.

(8) The lead alloy according to any one of (1) to (7) may contain Ca, and a content $C_{Ca}$ of Ca contained in the lead alloy may be 0.04% by mass or more and 0.09% by mass or less. Ca can improve the mechanical strength of the lead alloy.

(9) A lead-acid battery according to an embodiment of the present disclosure includes a positive electrode plate, a negative electrode plate, and a separator interposed between the positive electrode plate and the negative electrode plate, in which the positive electrode plate includes a positive current collector and a positive electrode material, the negative electrode plate includes a negative current collector and a negative electrode material, and at least one of the positive current collector and the negative current collector contains the lead alloy according to any one of (1) to (8). By using the lead alloy according to any one of (1) to (8), high-temperature overcharge life of the lead-acid battery is significantly improved.

(10) In the lead-acid battery according to (9), the separator may include a crystalline region and an amorphous region, and in an X-ray diffraction spectrum of the separator, crystallinity represented by $100 \times I_c/(I_c + I_a)$ may be 18% or more. Here, $I_c$ is the integrated intensity of the diffraction peak having the greatest peak height among the diffraction peaks corresponding to the crystalline region, and $I_a$ is the integrated intensity of a halo corresponding to the amorphous region. In this case, the crystallinity of the separator is high, and thus oxidative degradation of the separator is suppressed. The combination of the suppression of the oxidative degradation of the separator and the excellent corrosion resistance of at least one of the positive current collector and the negative current collector significantly improves the high-temperature overcharge life.

(11) In the lead-acid battery according to (9) or (10), a ratio represented by $I_{110}/(I_{110} + I_{200})$ may be 0.6 or more in the X-ray diffraction spectrum of the separator. Here, $L_{110}$ is the integrated intensity of the diffraction peak corresponding to a (110) plane, and $I_{200}$ is the integrated intensity of the diffraction peak corresponding to a (200) plane. In this case, the crystallinity of the separator is high, and thus oxidative degradation of the separator is suppressed. The combination of the suppression of the oxidative degradation of the separator and the excellent corrosion resistance of at least one of the positive current collector and the negative current collector significantly improves the high-temperature overcharge life.

In the present specification, the up-down direction of the lead-acid battery or components (such as plate, container, and separator) of the lead-acid battery refers to the up-down direction in the vertical direction of the lead-acid battery disposed in a used state. Each of the positive electrode plate and the negative electrode plate includes a lug part for connecting to an external terminal. For example, in flooded-type batteries, the lug part is provided on the upper part of the plate so as to protrude upward.

The lead-acid battery according to the present disclosure may be a valve regulated lead-acid battery (VRLA battery) or a flooded-type battery (vented battery).

The lead-acid battery includes a positive electrode plate, a negative electrode plate, a separator interposed between the positive electrode plate and the negative electrode plate, and an electrolyte solution. The electrolyte solution contains sulfuric acid. When sulfate ions move between the positive and negative electrode plates and the electrolyte solution, charging and discharging proceed.

The positive electrode plate, the negative electrode plate, and the separator compose the element. The element composes a cell together with the electrolyte solution. One element composes one cell. The lead-acid battery includes one or more cells by including one or more electrode groups. The number of positive electrode plates and negative electrode plates included in one element is not particularly limited. The element included in the lead-acid battery according to the present disclosure includes, for example, twelve or more positive electrode plates and negative electrode plates in total. Each of a plurality of the elements is usually stored in individual cell chambers and connected to each other in series.

The negative electrode plate contains a negative current collector and a negative electrode material. The negative electrode material contains at least lead during charging and at least lead sulfate during discharging as a negative active material that exhibits a capacity through a redox reaction.

The positive electrode plate includes a positive current collector and a positive electrode material. The positive electrode material contains at least lead dioxide during charging and at least lead sulfate during discharging as a positive active material that exhibits a capacity through a redox reaction.

Among the components of the lead-acid battery, the positive current collector is a component that is easily corroded, and thus it is an important object to suppress elongation and curvature of the positive electrode plate caused by the corrosion of the positive current collector. The corrosion of the positive current collector is likely to proceed at an interface between the positive current collector and the positive electrode material. When corrosion of the positive current collector occurs, falling off of the positive electrode material is promoted, and the lead-acid battery reaches the end of life.

The corrosion resistance of the positive current collector can be evaluated using the number of cycles until the end of life when a test of repeatedly overcharging the lead-acid battery at a high temperature (high-temperature overcharge test) is performed. The life exhibited in the high-temperature overcharge test is referred to as "high-temperature overcharge life".

Improving the strength of the positive current collector itself is considered to be effective in suppressing the corrosion of the positive current collector. The crystal structure of lead (Pb) is a face-centered cubic (fcc) lattice, which is soft and easily deformed. Such a crystal structure is considered to affect the progression of corrosion. One of the reasons why Pb is soft is that there is a "slip plane" in the crystal structure of Pb. In the present disclosure, attempts have been made to suppress "slip" inside the crystal structure by imparting distortion to the "slip plane" of the crystal structure of Pb. As a result of repeating various experiments, it has been found that the "slip" inside the crystal structure is indeed suppressed by imparting distortion to the "slip plane" of the crystal structure of Pb, thus strengthening the crystal structure of Pb. When a lead alloy in which such "slip" is suppressed is used for the positive current collector, the corrosion resistance is significantly improved. The strength of the negative current collector can also be improved by imparting distortion to the "slip plane" of the crystal structure of Pb.

As described above, the lead alloy for a lead-acid battery according to the present disclosure is a lead alloy in which distortion is imparted to the "slip plane" of the crystal structure of Pb. Specifically, an X-ray diffraction (XRD) spectrum of the lead alloy for a lead-acid battery according to the present disclosure includes a diffraction peak A, a diffraction peak B, and a diffraction peak C, and a peak C intensity ratio is 10% or more, the peak C intensity ratio being represented by "peak C intensity ratio (%) = 100 × intensity value of the diffraction peak C/(intensity value of the diffraction peak A + intensity value of the diffraction peak B + intensity value of the diffraction peak C)". The intensity value of each diffraction peak is calculated from the height of each peak.

The diffraction peak A is assigned to the (111) plane and appears at $2\theta$ = 31.12° to 31.42°.

The diffraction peak B is assigned to the (200) plane and appears at $2\theta$ = 36.11° to 36.41°.

The diffraction peak C is assigned to the (220) plane and appears at $2\theta$ = 52.07° to 52.37°.

The slip plane of the face-centered cubic (fcc) lattice structure includes the (111) plane. The smaller the intensity value of the diffraction peak A, the larger the distortion of the slip plane, the higher the orientation to the (200) plane and the (220) plane other than the slip plane, and the larger the intensities of the diffraction peak B and the diffraction peak C. That is, it is possible to say that the larger the peak C intensity ratio, the lower the orientation of the (111) plane, and the larger the distortion on the "slip plane" of the crystal structure of Pb.

When the peak C intensity ratio is 10% or more, the distortion of the (111) plane in the crystal structure of Pb is sufficiently large, the strength of the lead alloy is improved, and corrosion resistance is improved. The peak C intensity ratio may be 20% or more, 30% or more, or 50% or more. Since the lead alloy is based on a face-centered cubic (fcc) lattice structure, the upper limit of the peak C intensity ratio at which the characteristics of the lead alloy can be sufficiently exhibited is considered to be about 55%.

A method for setting the peak C intensity ratio to 10% or more is not particularly limited, and it is possible to design the composition of the lead alloy so that the orientation to the (111) plane of the lead alloy is reduced. For example, by incorporating sodium (Na) and bismuth (Bi) into the lead alloy, the peak C intensity ratio can be set to 10% or more.

Bi is a simple rhombohedral lattice, has a crystal structure different from that of Pb, and has a crystal structure different from those of Sn and Ca which are often added to a lead alloy that composes a current collector. Therefore, Bi dissolves in Pb, but the addition of Bi alone does not affect the crystal structure of Pb.

Since Na produces a $Pb_3Na$ intermetallic compound with Pb, when Na is added to Pb alone, Na has the same effect as precipitation hardening caused by the addition of Ca. On the other hand, Na and Bi produce a BiNa intermetallic compound. The melting point of the BiNa intermetallic compound is higher than that of the $Pb_3Na$ intermetallic compound. Therefore, when molten lead containing Na and Bi is cooled, the BiNa intermetallic compound is produced first. The crystal structure of the BiNa intermetallic compound is a body-centered tetragonal lattice. The lattice constants of the BiNa intermetallic compound are a = 0.34660 nm and c = 0.480000 nm that are close to the interplanar spacing of the (220) plane of Pb which is 0.35002 nm and the lattice constant a = 0.49502 nm, respectively. Therefore, when the BiNa intermetallic compound is incorporated into the crystal structure of Pb, orientation to the (220) plane occurs in the crystal structure of Pb. As a result of the orientation to the (220) plane, distortion occurs in the slip plane of Pb, and the slip plane is less likely to slip. Therefore, the corrosion resistance of the lead alloy is improved.

As described above, it is considered that, by arbitrarily designing the crystal structure, lattice constant, and the like of the intermetallic compound that can be produced in the lead alloy, distortion can occur in the slip plane of Pb even in cases other than the case of using Na and Bi.

The content $C_{Na}$ of Na contained in the lead alloy is preferably, for example, 0.001% by mass or more and 0.03% by mass or less in the presence of Bi. The corrosion resistance of the lead alloy can be improved even when the content $C_{Na}$ of Na is less than 0.001% by mass, but the content $C_{Na}$ is preferably 0.001% by mass or more from the viewpoint of more significantly improving the corrosion resistance. Furthermore, the corrosion resistance of the lead alloy can be improved even when the content $C_{Na}$ of Na exceeds 0.03% by mass, but the content $C_{Na}$ is preferably 0.03% by mass or less from the viewpoint of more significantly improving the corrosion resistance.

The content $C_{Bi}$ of Bi contained in the lead alloy is preferably, for example, 0.001% by mass or more and 0.05% by mass or less in the presence of Na. The corrosion resistance of the lead alloy can be improved even when the content $C_{Bi}$ of Bi is less than 0.001% by mass, but the content $C_{Bi}$ is preferably 0.001% by mass or more from the viewpoint of more significantly improving the corrosion resistance. Furthermore, the corrosion resistance of the lead alloy can be improved even when the content $C_{Bi}$ of Bi exceeds 0.05% by mass, but the content $C_{Bi}$ is preferably 0.05% by mass or less from the viewpoint of more significantly improving the corrosion resistance.

Controlling the ratio of the content $C_{Bi}$ of Bi contained in the lead alloy to the content $C_{Na}$ of Na contained in the lead alloy: $C_{Bi}/C_{Na}$ at 6 or more and 12 or less is effective. In this case, Bi and Na can produce the BiNa intermetallic compound, rather than each independently dissolving in the lead alloy. Therefore, the corrosion resistance of the lead alloy can be efficiently improved with small amounts of Bi and Na. The $C_{Bi}/C_{Na}$ ratio may be 7 or more and 11 or less, or 8 or more and 10 or less.

For example, assuming that the lead alloy is used for a current collector, the lead alloy may further contain at least one of Ca and Sn. Calcium (Ca) mainly improves the mechanical strength of the lead alloy, and tin (Sn) mainly improves the corrosion resistance of the lead alloy.

An adequate content $C_{Sn}$ of Sn contained in the lead alloy is, for example, 1.5% by mass or more and 2.5% by mass or less. The content $C_{Sn}$ may be 1.6% by mass or more or 1.7% by mass or more. The content $C_{Sn}$ may be 2.3% by mass or less or 2.2% by mass or less.

An adequate content $C_{Ca}$ of Ca contained in the lead alloy is, for example, 0.04% by mass or more and 0.09% by mass or less. The content $C_{Ca}$ The content $C_{Ca}$ may be 0.05% by mass or more. The content $C_{Ca}$ may be 0.08% by mass or less.

Hereinafter, a lead-acid battery according to an embodiment of the present disclosure will be described.

The lead-acid battery includes a positive electrode plate, a negative electrode plate, and a separator interposed between the positive electrode plate and the negative electrode plate, in which the positive electrode plate includes a positive current collector and a positive electrode material, and the negative electrode plate includes a negative current collector and a negative electrode material. The lead alloy in which distortion occurs in the slip plane of Pb as described above is preferably used, for example, for at least one of the positive current collector and the negative current collector, and is preferably used for the positive current collector which is particularly preferred to have high corrosion resistance. However, the use of the lead alloy described above is not limited to the positive current collector and the negative current collector, and the lead alloy may be used for any member.

(Definition of Full Charge State)

In the present specification, the full charge state of the flooded-type lead-acid battery is defined by the definition of JIS D 5301:2019. More specifically, the following state is defined as a full charge state: the lead-acid battery is charged at a current $2I_{20}$ that is twice a 20 hour rate current $I_{20}$ in a water bath at 25°C $\pm$ 2°C until the value of the terminal voltage (unit: V) during charge measured every fifteen minutes or the electrolyte solution density subjected to temperature correction to 20°C is a constant value with three significant digits at three consecutive times. The 20 hour rate current $I_{20}$ is a current (A) of 1/20 of a numerical value of Ah indicated in the rated capacity. Hereinafter, the numerical value indicated as the rated capacity and having the unit of Ah is simply referred to as "rated capacity".

In the case of a valve regulated lead-acid battery, the full charge state is a state where the lead-acid battery is subjected to constant current constant voltage charge of 2.67 V/cell (16.00 V in a lead-acid battery having a rated voltage of 12 V) at a current of $5I_{20}$ that is five times the 20 hour rate current $I_{20}$ in an air tank at 25°C $\pm$ 2°C, and the charge is terminated when a total charge time reaches twenty-four hours.

The unit of the current set based on the numerical value indicated as the rated capacity is A.

The lead-acid battery in the full charge state is a lead-acid battery obtained by charging a formed lead-acid battery to the full charge state. The lead-acid battery may be charged immediately after formation or after a lapse of time from the formation (for example, a lead-acid battery in use (preferably at the initial stage of use) may be fully charged after the formation), so long as the charge is performed after the formation.

In the present specification, the battery at the initial stage of use is a battery that has been used for a short time and has hardly degraded.

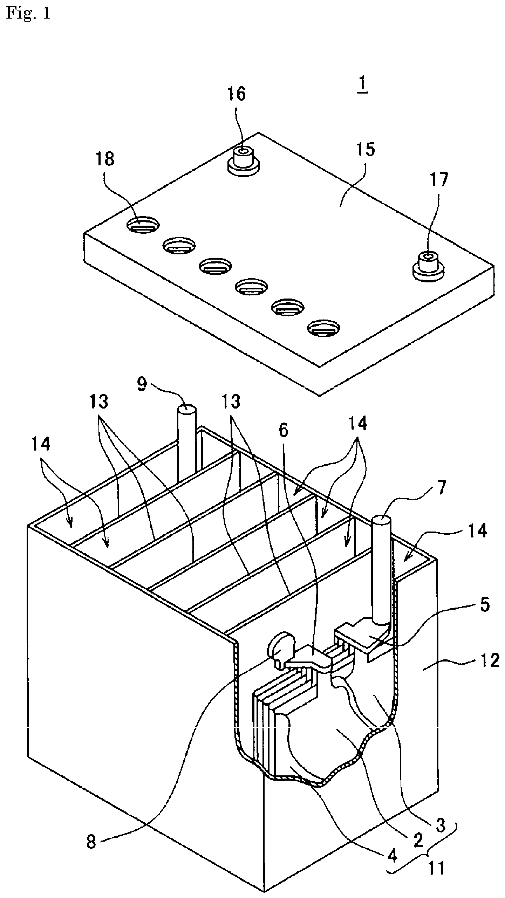

Fig. 1 shows a part of the appearance and the internal structure of a lead-acid battery according to an embodiment. A lead-acid battery 1 includes a container 12 that accommodates an element 11 and an electrolyte solution (not shown). The inside of the container 12 is partitioned into a plurality of cell chambers 14 by partitions 13. Each of the cell chambers 14 contains one element 11. An opening of the container 12 is closed with a lid 15 including a negative electrode terminal 16 and a positive electrode terminal 17. A vent plug 18 is provided in the lid 15 for each cell chamber. At the time of water addition, the vent plug 18 is removed to supply a water addition liquid. The vent plug 18 may have a function of discharging gas generated in the cell chamber 14 to the outside of the battery.

The element 11 is configured by stacking a plurality of negative electrode plates 2 and a plurality of positive electrode plates 3 with a separator 4 interposed therebetween. Here, the bag-shaped separator 4 accommodating the negative electrode plate 2 is shown, but the shape of the separator is not particularly limited. In the cell chamber 14 located at one end of the container 12, a negative electrode shelf 6 connecting the plurality of negative electrode plates 2 in parallel is connected to a penetrating connection body 8, and a positive electrode shelf 5 connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf 6, and the penetrating connection body 8 is connected to the positive electrode shelf 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series. The lead alloy according to the present disclosure may be used for at least one of the positive electrode shelf 5, the negative electrode shelf 6, the positive pole 7, the penetrating connection body 8, the negative pole 9, the negative electrode terminal 16, and the positive electrode terminal 17 which are components containing a lead alloy.

Fig. 1 is merely an example of a flooded-type lead-acid battery, and the structure of the lead-acid battery according to the present disclosure is not limited to the example in the drawing. In addition, the following description does not limit the configuration of the lead-acid battery according to the present invention.

(Negative Electrode Plate)

The negative electrode plate of the lead-acid battery is configured of a negative current collector and a negative electrode material. The negative electrode material is a portion of the negative electrode plate excluding the negative current collector. A sticking member may be stuck to the negative electrode plate. In this case, the sticking member is included in the negative electrode plate. In a case where the negative electrode plate includes the sticking member, the negative electrode material is a portion of the negative electrode plate excluding the negative current collector and the sticking member.

The negative current collector included in the negative electrode plate may be produced by casting lead (Pb) or a lead alloy or by processing a lead sheet or a lead alloy sheet. Examples of the processing method include expanding processing or punching processing. When a grid-like current collector is used as the negative current collector, the negative electrode material is easily supported, which is preferable.

The lead alloy used for the negative current collector may be any of a lead alloy in which distortion occurs in the slip plane as described above, a Pb-Sb-based alloy, a Pb-Ca-based alloy, and a Pb-Ca-Sn-based alloy. The lead alloy in which distortion occurs in the slip plane as described above may further contain at least one selected from the group consisting of Na, Bi, Ba, Ag, Al, As, Se, Cu, and the like as an additive element. The negative current collector may include lead alloy layers having different compositions, and a single alloy layer or a plurality of alloy layers may be provided.

The negative electrode material contained in the negative electrode plate contains Pb. Pb is a negative active material that exhibits a capacity through a redox reaction and is contained in the negative electrode material as lead or lead sulfate.

The negative electrode material may further contain an organic expander, a carbonaceous material, barium sulfate, a reinforcing material, or the like.

Examples of the organic expander include lignin, lignin sulfonic acid, and synthetic organic expanders (such as formaldehyde condensate of phenol compound). The content of the organic expander in the negative electrode material is, for example, 0.01% by mass or more. The content of the organic expander is, for example, 1.2% by mass or less.

Examples of the carbonaceous material include carbon black, graphite, hard carbon, and soft carbon. The content of the carbonaceous material in the negative electrode material is, for example, 0.1% by mass or more. The content of the carbonaceous material may be, for example, 3.5% by mass or less.

Examples of the reinforcing material include a fiber (an inorganic fiber, an organic fiber, or the like). The content of the reinforcing material in the negative electrode material is, for example, 0.03% by mass or more. The content of the reinforcing material in the negative electrode material is, for example, 0.6% by mass or less.

(Method for Manufacturing Negative Electrode Plate)

The negative electrode plate can be produced in such a manner that a negative current collector is filled with a negative electrode paste, which is then cured and dried to prepare an unformed negative electrode plate, and thereafter, the unformed negative electrode plate is formed. The negative electrode paste is prepared by adding water and sulfuric acid to lead powder, an organic expander, barium sulfate, or the like, and performing mixing. Note that the negative active material in the charged state is spongy lead, but the unformed negative electrode plate is usually prepared using lead powder. In the curing process, it is preferable to cure the unformed negative electrode plate at a temperature higher than room temperature and high humidity.

The formation can be performed by charging the element in a state where the element including the unformed negative electrode plate is immersed in an electrolyte solution containing sulfuric acid in a container of the lead-acid battery. However, the formation may be performed before the lead-acid battery or the element is assembled. The formation produces spongy lead.

(Positive Electrode Plate)

As the positive electrode plate, a paste-type positive electrode plate is used. The paste-type positive electrode plate includes a positive current collector and a positive electrode material. The positive electrode material is held by the positive current collector. The positive electrode material is a portion of the positive electrode plate excluding the positive current collector. A member such as a mat or a pasting paper may be stuck to the positive electrode plate. Such a sticking member is used integrally with the positive electrode plate, and is thus included in the positive electrode plate. In a case where the positive electrode plate includes the sticking member, the positive electrode material is a portion of the positive electrode plate excluding the positive current collector and the sticking member.

The positive current collector included in the positive electrode plate may be produced by casting lead (Pb) or a lead alloy or by processing a lead sheet or a lead alloy sheet. Examples of the processing method include expanding processing or punching processing. When a grid-like current collector is used as the positive current collector, the positive electrode material is easily supported, which is preferable.

As a lead alloy used for the positive current collector, a lead alloy in which distortion occurs in the slip plane as described above, a Pb-Ca-based alloy, or a Pb-Ca-Sn-based alloy are preferred in terms of corrosion resistance and mechanical strength. The lead alloy in which distortion occurs in the slip plane as described above may further contain at least one selected from the group consisting of Na, Bi, Ba, Ag, Al, As, Se, Cu, and the like as an additive element. The positive current collector may include lead alloy layers having different compositions, and a single alloy layer or a plurality of alloy layers may be provided.

The positive electrode material contained in the positive electrode plate contains a positive active material (lead dioxide or lead sulfate) that exhibits a capacity through a redox reaction. The positive electrode material may optionally contain another additive (such as a reinforcing material) as needed.

Examples of the reinforcing material include a fiber (an inorganic fiber, an organic fiber, or the like). The content of the reinforcing material in the positive electrode material is, for example, 0.03% by mass or more. The content of the reinforcing material in the positive electrode material is, for example, 0.5% by mass or less.

An unformed paste-type positive electrode plate is obtained by filling the positive current collector with a positive electrode paste and curing and drying the positive electrode paste. The positive electrode paste is prepared by adding water and sulfuric acid to lead powder and an additive (such as a reinforcing material) as necessary, and performing mixing.

The positive electrode plate is obtained by forming an unformed positive electrode plate. The formation can be performed by charging the element in a state where the element including the unformed positive electrode plate is immersed in an electrolyte solution containing sulfuric acid in a container of the lead-acid battery. However, the formation may be performed before the lead-acid battery or the element is assembled.

(Separator)

As the separator disposed between the negative electrode and the positive electrode, for example, at least one selected from a nonwoven fabric and a microporous membrane is used.

The nonwoven fabric is a mat in which fibers are intertwined without being woven and is mainly composed of fibers. For example, 60% by mass or more of the nonwoven fabric is produced using fibers. As the fibers, there can be used glass fibers, polymer fibers (polyolefin fiber, acrylic fiber, polyester fiber (polyethylene terephthalate fiber, or the like), and the like), pulp fibers, and the like. Among these, glass fibers are preferable. The nonwoven fabric may contain components other than the fibers, such as acid-resistant inorganic powder, a polymer as a binder, and the like.

The microporous membrane is a porous sheet mainly made of components other than fiber components and is obtained by, for example, extrusion molding a composition containing a pore-forming additive into a sheet shape and then removing the pore-forming additive to generate pores. The microporous membrane is preferably made of a material having acid resistance and is preferably composed mainly of a polymer component. As the polymer component, a polyolefin (polyethylene, polypropylene, or the like) is preferable. Examples of the pore-forming additive include polymer powder and oil.

The separator may be made of only a nonwoven fabric or made of only a microporous membrane. The separator may be a stacked article of a nonwoven fabric and a microporous membrane, a stacked article of different or the same kind of materials bonded together, or a stacked article of different or the same kind of materials in which recesses and projections are engaged to each other.

The separator may have a sheet shape or may be produced in a bag shape. One sheet-like separator may be disposed between the positive electrode and the negative electrode. The plate may be sandwiched by the folded sheet-like separator. The positive electrode sandwiched by the folded sheet-like separator and the negative electrode sandwiched by the folded sheet-like separator may be overlapped, or one of the positive electrode and the negative electrode may be sandwiched by the folded sheet-like separator and overlapped with the other plate. When the bag-shaped separator is used, the bag-shaped separator may accommodate the positive electrode or may accommodate the negative electrode.

Hereinafter, a preferred example of the microporous membrane separator (hereinafter, also referred to as "separator (S)") will be described. The separator (S) includes a crystalline region in which molecules of a constituent material of the separator are relatively regularly arranged (that is, the alignment property is high).

A first separator (S) includes a crystalline region and an amorphous region. Thus, in the X-ray diffraction (XRD) spectrum of the separator, a diffraction peak due to the crystalline region is observed, and scattered light due to the amorphous region is observed as a halo. The amorphous region is a region in which the alignment property of the molecules of the constituent material of the separator is low.

In the XRD spectrum of the first separator (S), crystallinity represented by $100 \times I_c/(I_c + I_a)$ (hereinafter, also referred to as "crystallinity A") is 18% or more. Here, $I_c$ is an integrated intensity of a diffraction peak (hereinafter, also referred to as "first diffraction peak") having the greatest peak height among diffraction peaks corresponding to the crystalline region. $I_a$ is the integrated intensity of the halo corresponding to the amorphous region. The crystallinity A may be 20% or more, 22% or more, or 23% or more from the viewpoint of securing higher high-temperature overcharge life performance. The crystallinity A may be 25% or more, 30% or more, 35% or more, or 40% or more. The crystallinity A may be 50% or less, 45% or less, 37% or less, or 35% or less from the viewpoint of ensuring high flexibility of the separator and ease of manufacture. When the range of the crystallinity A is limited, these upper limits and lower limits may be arbitrarily combined as long as the upper limit is not equal to or less than the lower limit.

A second separator (S) may include a crystalline region. In the XRD spectrum of the second separator (S), a ratio represented by $I_{110}/(I_{110} + I_{200})$ (hereinafter, also referred to as "peak ratio B") is 0.6 or more. Here, $I_{110}$ is the integrated intensity of the diffraction peak corresponding to the (110) plane, and $I_{200}$ is the integrated intensity of the diffraction peak corresponding to the (200) plane. The peak ratio B may be 0.7 or more, 0.75 or more, 0.8 or more, or 0.85 or more. The peak ratio B is 1.0 or less, and may be 0.95 or less or 0.9 or less from the viewpoint of ensuring high flexibility of the separator and ease of manufacture. When the range of the peak ratio B is limited, these upper limits and lower limits may be arbitrarily combined as long as the upper limit is not equal to or less than the lower limit.

As described above, the separator (S) has high durability with at least one of the crystallinity A and the peak ratio B being high. When the peak C intensity ratio is 10% or more, the high-temperature overcharge life can be significantly improved by using a separator (S) having high crystallinity A or a high peak ratio B.

It is considered that the significant improvement in the high-temperature overcharge life is associated with the suppression of deformation of the positive current collector and the suppression of softening and falling off of the positive electrode material resulting from the improvement in the corrosion resistance of the lead alloy, as well as the fact that the separator (S) is less likely to undergo oxidative degradation. When the peak C intensity ratio is 10% or more, even the positive electrode material is softened and falls off, the amount of such a positive electrode material remains small. Even in a case where a small amount of the positive electrode material falls off, the separator is only slightly damaged due to high oxidation resistance of the separator, and thus a short circuit derived from oxidative degradation of the separator is less likely to occur. As a result, high high-temperature overcharge life performance is obtained.

On the other hand, when the peak C intensity ratio is, for example, 1%, the positive current collector is deformed in a high-temperature overcharge life test, and the positive electrode material is easily softened and falls off. When a relatively large amount of the positive electrode material that has fallen off comes into contact with the separator (S), it may be difficult to suppress the oxidative degradation of the separator (S) even when the oxidation resistance of the separator (S) is enhanced. When the peak C intensity ratio is less than 10%, a larger amount of the positive electrode material softens or falls off, and the contact area between such a positive electrode material and the separator (S) increases. As a result, even when the oxidation resistance of the separator (S) is enhanced, the oxidative degradation of the separator (S) cannot be sufficiently suppressed, and the lead-acid battery reaches the end of life.

The thickness of the separator (S) is preferably 100 $\mu$m or more and 300 $\mu$m or less. When the thickness is in such a range, the effect of suppressing the oxidative degradation of the separator is further enhanced, and the high-temperature overcharge life performance can be further improved.

The separator (S) preferably contains oil. In this case, the effect of suppressing the oxidative degradation of the separator is further enhanced, and higher high-temperature overcharge life performance can be secured.

The separator (S) preferably contains a polyolefin, and more preferably contains a polyolefin containing at least an ethylene unit. Although such a separator (S) easily undergoes oxidative degradation, the crystallinity can be relatively easily increased. When the separator (S) contains a polyolefin containing at least an ethylene unit, the first diffraction peak corresponds to the (110) plane from the crystalline region.

For example, in the XRD spectrum of a separator containing a polyolefin containing an ethylene unit, the diffraction peak corresponding to the (110) plane of the crystalline region (first diffraction peak having the greatest peak height) is observed in a range where 2θ is 20° or more and 22.5° or less, and the diffraction peak corresponding to the (200) plane of the crystalline region is observed in a range where 2θ is 23° or more and 24.5° or less. The halo in the amorphous region is observed in a range where 2θ is 17° or more and 27° or less.

The integrated intensities of the diffraction peak and the halo are determined by fitting the diffraction peak due to the crystalline region and the halo due to the amorphous region in the XRD spectrum of the separator. The crystallinity A and the peak ratio B are obtained from the above formulas using the obtained integrated intensity $I_c$ ($I_{100}$) of the first diffraction peak (diffraction peak corresponding to the (110) plane), the integrated intensity of the diffraction peak corresponding to the (200) plane, and the integrated intensity $I_a$ of the halo.

The separator (S) contains a polymer material (hereinafter, also referred to as a base polymer). Since the separator (S) includes the crystalline region, the base polymer usually contains a crystalline polymer. The separator (S) contains, for example, a polyolefin. The polyolefin is a polymer containing at least an olefin unit (that is, a polymer containing at least a monomer unit derived from an olefin).

As the base polymer, a polyolefin and another base polymer may be used in combination. The ratio of the polyolefin to the entire base polymer contained in the separator (S) is, for example, 50% by mass or more, and may be 80% by mass or more or 90% by mass or more. The ratio of the polyolefin is, for example, 100% by mass or less. The base polymer may be composed of only the polyolefin. When the ratio of the polyolefin is as large as described above, the oxidation resistance of the separator (S) tends to be low; however, even in such a case, high high-temperature overcharge life performance can be secured by setting the crystallinity A or the peak ratio B within the above range.

Examples of the polyolefin include a homopolymer of an olefin, a copolymer containing different olefin units, and a copolymer containing an olefin unit and a copolymerizable monomer unit. The copolymer containing an olefin unit and a copolymerizable monomer unit may contain one kind or two or more kinds of olefin units. Moreover, the copolymer containing an olefin unit and a copolymerizable monomer unit may contain one kind or two or more kinds of copolymerizable monomer units. The copolymerizable monomer unit is a monomer unit derived from a polymerizable monomer that is not an olefin but can be copolymerized with an olefin.

Examples of the polyolefin include a polymer containing at least a C2-3 olefin as a monomer unit. Examples of the C2-3 olefin include at least one selected from the group consisting of ethylene and propylene. As the polyolefin, for example, polyethylene, polypropylene, and a copolymer containing a C2-3 olefin as a monomer unit (for example, an ethylene-propylene copolymer) are more preferable. Among the polyolefins, a polyolefin containing at least an ethylene unit (polyethylene, ethylene-propylene copolymer, or the like) is preferably used. A polyolefin containing an ethylene unit (polyethylene, ethylene-propylene copolymer, or the like) may be used in combination with another polyolefin.

The separator (S) preferably contains oil. When the separator (S) contains oil, the effect of suppressing oxidative degradation of the separator (S) can be further enhanced, and thus, higher high-temperature overcharge life performance can be secured. The oil refers to a hydrophobic substance that is liquid at room temperature (a temperature of 20°C or more and 35°C or less) and is separated from water. The oil includes naturally derived oil, mineral oil, and synthetic oil. As the oil, mineral oil, synthetic oil, and the like are preferable. Examples of the oil include paraffin oil and silicone oil. The separator (S) may contain one kind of oil or a combination of two or more kinds of oil.

The content of the oil in the separator (S) is preferably 11% by mass or more and 18% by mass or less. When the oil content is in such a range, the effect of suppressing the oxidative degradation of the separator (S) is further enhanced. The resistance of the separator (S) can be suppressed to be relatively low.

The separator (S) may have a sheet shape. Furthermore, a sheet bent in a bellows shape may be used as the separator (S). The separator (S) may be produced into a bag shape. Either one of the positive electrode plate and the negative electrode plate may be wrapped in the bag-shaped separator (S).

The separator (S) may or may not include a rib. For example, the separator (S) including the rib includes a base and a rib erected from a surface of the base. The rib may be provided only on a surface of one of the separator (S) or each base, or provided on the surfaces of both the separator (S) and each base. The base of the separator (S) is a portion of the part configuring the separator (S) excluding protrusions such as ribs, and refers to a sheet-like portion that defines the outer shape of the separator (S).

The thickness of the separator (S) is, for example, 90 μm or more. The thickness is preferably 100 μm or more or 150 μm or more from the viewpoint of obtaining higher high-temperature overcharge life performance. The thickness of the separator (S) is, for example, 300 μm or less. From the viewpoint of suppressing the resistance of the separator (S) to a low level, the thickness of the separator (S) may be 250 μm or less or 200 μm or less. The thickness of the separator (S) means an average thickness in a portion of the separator (S) facing the electrode material. When the separator (S) includes the base and the rib erected from at least one surface of the base, the thickness of the separator (S) is an average thickness in the base. However, when a sticking member (a mat, a pasting paper, or the like) is stuck to the separator (S), the thickness of the sticking member is not included in the thickness of the separator (S).

The thickness of the separator (S) may be 90 μm or more and 300 μm or less (or 250 μm or less), 90 μm or more and 200 μm or less, 100 μm or more (or 150 μm or more) and 300 μm or less, 100 μm or more (or 150 μm or more) and 250 μm or less, or 100 μm or more (or 150 μm or more) and 200 μm or less.

When the separator (S) includes the rib, the height of the rib may be 0.05 mm or more. The height of the rib may be 1.2 mm or less. The height of the rib is a height (protrusion height) of a portion protruding from a surface of the base.

The height of the rib provided in the region of the separator (S) facing the positive electrode plate may be 0.4 mm or more. The height of the rib provided in the region of the separator (S) facing the positive electrode plate may be 1.2 mm or less.

The separator (S) is obtained, for example, by extrusion molding a resin composition containing a base polymer and a pore-forming additive into a sheet shape, stretching the resin composition, and then removing at least a portion of the pore-forming additive. By removing at least a portion of the pore-forming additive, micropores are generated in a matrix of the base polymer. The sheet-shaped separator (S) is dried as necessary after removing the pore-forming additive. The crystallinity A or the peak ratio B is adjusted by, for example, adjusting at least one selected from the group consisting of a rate of cooling a sheet during extrusion molding, a stretch ratio during stretching, and the temperature during drying. For example, when the sheet is rapidly cooled at the time of extrusion molding, the stretch ratio is increased, or the temperature during drying is lowered, the crystallinity A or the peak ratio B tends to increase. The stretching may be performed by biaxial stretching, but is usually performed by uniaxial stretching. The sheet-shaped separator (S) may be bent into a bellows shape or processed into a bag shape as necessary.

In the separator (S) including the rib, the rib may be provided on a sheet when the resin composition is extrusion molded. The rib may be created by pressing the sheet with a roller including a groove corresponding to each rib after molding the resin composition into a sheet shape or after removing the pore-forming additive.

Examples of the pore-forming additive include a liquid pore-forming additive and a solid pore-forming additive. The pore-forming additive preferably contains at least oil. By using the oil, a separator (S) containing oil is obtained, and the effect of suppressing the oxidative degradation is further enhanced. The pore-forming additive may be used singly or in combination of two or more kinds thereof. The oil and another pore-forming additive may be used in combination. The liquid pore-forming additive and the solid pore-forming additive may be used in combination. The pore-forming additive that is a liquid at room temperature (a temperature of 20°C or more and 35°C or less) is classified as a liquid pore-forming additive, and the pore-forming additive that is a solid at room temperature is classified as a solid pore-forming additive.

The liquid pore-forming additive is preferably the oil described above. Examples of the solid pore-forming additive include polymer powder.

The amount of the pore-forming additive in the separator (S) may vary depending on the type. The amount of the pore-forming additive in the separator (S) is, for example, 30 parts by mass or more per 100 parts by mass of the base polymer. The amount of the pore-forming additive is, for example, 60 parts by mass or less per 100 parts by mass of the base polymer.

The separator (S) containing the oil is produced, for example, by extracting and removing a portion of the oil from a sheet produced using the oil as the pore-forming additive using a solvent. The solvent is selected, for example, according to the type of the oil. The content of the oil in the separator (S) is adjusted, for example, by adjusting the type and composition of the solvent, extraction conditions (such as the extraction time, the extraction temperature, and the rate of solvent supply), and the like.

The separator (S) (or the resin composition provided for the production of the separator (S)) may contain inorganic particles.

For example, ceramic particles are preferable as the inorganic particles. Examples of the ceramic constituting the ceramic particles include at least one selected from the group consisting of silica, alumina, and titania.

The content of the inorganic particles in the separator (S) may be, for example, 40% by mass or more. The content of the inorganic particles is, for example, 80% by mass or less and may be 70% by mass or less.

(Electrolyte Solution)

The electrolyte solution is an aqueous solution containing sulfuric acid. The electrolyte solution may be gelled as necessary.

The electrolyte solution may further contain at least one metal ion selected from the group consisting of Na ions, Li ions, Mg ions, and Al ions.

A specific gravity of the electrolyte solution at 20°C is, for example, 1.10 or more. The specific gravity of the electrolyte solution at 20°C may be 1.35 or less. These specific gravities are values for the electrolyte solution of the lead-acid battery in the full charge state.

The matters described in the present specification can be arbitrarily combined.

The high-temperature overcharge life performance of the lead-acid battery is evaluated based on the life of the lead-acid battery at the time of performing a high-temperature overcharge durability test according to the following procedure.

(a) Throughout the test period, the storage battery is placed in a temperature chamber at 75°C ± 3°C.

(b) The lead-acid battery is connected to a life experimental device, and the following cycle of discharge and charge is continuously repeated. This cycle of discharge and charge is defined as one cycle of life (one cycle).

Discharge: 60 seconds $\pm$ 1 second at a discharge current of 25.0 A $\pm$ 0.1 A
Charge: 600 seconds $\pm$ 1 second at a charge voltage of 14.80 V $\pm$ 0.03 V (limiting current: 25.0 A $\pm$ 0.1 A)

(c) During the test, the lead-acid battery is allowed to stand for fiftysix hours every 480 cycles, and then continuously discharged at a rated cold cranking current of $I_{cc}$ for 30 seconds, and a 30 second voltage at discharge is recorded. Thereafter, the charge in (b) is performed. The discharge and charge are also added to the number of cycles of life (the number of cycles).
(d) The test is terminated when it is confirmed that the 30 second voltage at discharge measured in the test (c) is 7.2 V or less and does not rise again, and the total number of cycles at this time is used as an index of the life performance.

Here, the rated cold cranking current $I_{cc}$ is a current value according to a performance rank defined in JIS D 5301:2019.
Measurement and analysis of the XRD spectrum of the lead alloy are performed under the following conditions.

(Preparation of Measurement Sample)

First, the lead-acid battery in a full charge state is disassembled to obtain a component to be analyzed. When the component to be analyzed is the positive current collector or the negative current collector, the lug part is cut, and the cut surface is taken as the measurement point. In the case of a component other than the positive current collector and the negative current collector, the component is cut at an appropriate position, and the cut surface is taken as the measurement point.

(Measurement Conditions)

The XRD spectrum is measured by irradiating the cut surface with an X-ray from a direction perpendicular to the cut surface. RINT-TTR II manufactured by Rigaku Corporation is used as an XRD apparatus measurement apparatus, and a CuK$\alpha$ ray having a wavelength of 0.154056 nm is used as an X-ray source. XRD of the lead alloy in the range of $2\theta = 20$ to 90° is measured by a parallel beam method, angle correction is performed using a NIST standard substance (NIST 660b, LaB$_6$) as an external standard sample, and intensity values of diffraction peaks assigned to the (111) plane, the (200) plane, and the (220) plane of the lead alloy (cubic system, space group Fm-3m) are obtained. From these values, the intensity ratio of each diffraction peak to the sum of the intensity value of each diffraction peak is determined. Depending on the X-ray source that is used, the sub-peak of each diffraction peak may be observed to overlap with the main peak. In this case, the sub-peak is not subjected to peak separation, and the intensity ratio of each diffraction peak is obtained from the intensity value of the main peak.

(Analysis or Size Measurement of Separator (S))

(Preparation of Separator (S))

For analysis or size measurement of the separator (S), an unused separator (S) or a separator (S) taken out from the lead-acid battery in the full charge state at the initial stage of use is used. The separator (S) taken out from the lead-acid battery is washed and dried prior to the analysis or the measurement.
The separator (S) taken out from the lead-acid battery is washed and dried in the following procedure. The separator (S) taken out from the lead-acid battery is immersed in pure water for 1 hour to remove sulfuric acid in the separator (S). Subsequently, the separator (S) is taken out from a liquid in which the separator has been immersed, left to stand in an environment of 25°C $\pm$ 5°C for sixteen or more hours, and dried.

(XRD Spectrum)

The XRD spectrum of the separator (S) is measured by irradiating the surface of the separator (S) with an X-ray from a direction perpendicular to the surface of the separator (S). A sample for measurement is prepared by processing the portion of the separator (S) facing the electrode material into a strip shape. In the separator (S) including the rib, the base is processed into a strip shape so as not to include the rib, thereby preparing a sample. Measurement and fitting of the XRD spectrum are performed under the following conditions.

(Measurement Conditions)

Measuring apparatus: RINT-TTR II, manufactured by Rigaku Corporation
Fitting: FT (step scan) method
Range of measurement angle: 15 to 35°
Step width: 0.02°
Measurement speed: 5°/min
XRD data processing: XRD pattern analysis software (PDXL2, manufactured by Rigaku Corporation) is used.

(Thickness of Separator (S) and Height of Rib)

The thickness of the separator (S) is obtained by measuring and averaging the thicknesses of the separator (S) at five arbitrarily selected points in the sectional photograph of the separator (S).
The height of the rib is obtained by averaging the heights of the rib measured at ten arbitrarily selected points from one surface of the base in the sectional photograph of the separator (S).

(Content of Oil in Separator (S))

A portion of the separator (S) facing the electrode material is processed into a strip shape to prepare a sample (hereinafter, referred to as a sample A). In the separator (S) including the rib, the base is processed into a strip shape so as not to include the rib, thereby preparing the sample A.
About 0.5 g of the sample A is collected and accurately weighed to obtain the initial mass (m0) of the sample. The weighed sample A is placed in a glass beaker having an appropriate size, and 50 mL of n-hexane is added. Subsequently, an oil content contained in the sample A is eluted into the n-hexane by applying ultrasonic waves to the sample for about 30 minutes and all a beaker. Subsequently, the sample is taken out of the n-hexane, dried at room temperature (temperature of 20°C or more and 35°C or less) in an atmosphere, and then weighed to obtain the mass (m1) of the sample after oil removal. Then, the content of the oil is calculated by the following equation. The content of the oil is determined for ten samples A, and the average value is calculated. The obtained average value is defined as the content of the oil in the separator (S).

$$\text{Content of oil (\% by mass)} = (m0 - m1)/m0 \times 100$$

(Content of Inorganic Particles in Separator (S))

A portion of the sample A prepared in a similar manner to the above is collected, accurately weighed, placed in a platinum crucible, and heated with a Bunsen burner until no white smoke comes out. Subsequently, in an electric furnace (550°C $\pm$ 10°C in oxygen stream), the obtained sample is heated for about 1 hour to be incinerated, and the incinerated product is weighed. The ratio (percentage) of the mass of the incinerated product to the mass of the sample A is calculated and taken the content (% by mass) of the inorganic particles. The content of the inorganic particles is determined for ten samples A, and the average value is calculated. The obtained average value is defined as the content of the inorganic particles in the separator (S).

[Examples]

Hereinafter, the present invention will be specifically described based on Examples and Comparative Examples, but the present invention is not limited to the following Examples.

(Batteries A1 to A15 and CA1 to CA10)

(1) Preparation of Positive Electrode Plate

Lead oxide, a reinforcing material (synthetic resin fibers), water, and sulfuric acid were mixed to prepare a positive electrode paste. A mesh portion of an expanded grid which was a positive current collector made of a lead alloy was filled with the positive electrode paste, and the positive electrode paste was cured and dried to obtain an unformed positive electrode plate having a width of 100 mm, a height of 110 mm, and a thickness of 1.6 mm.

The contents of components used for the positive current collector other than Pb in the lead alloy are shown in Table 1.

The peak intensity ratios in the XRD spectrum of the lead alloy measured by the above-described method are shown in Table 1.

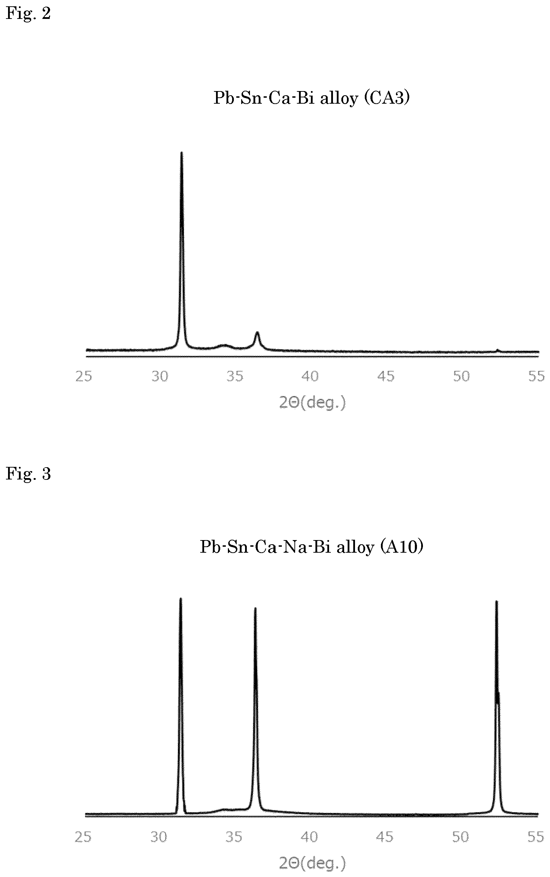

The XRD spectrum of the lead alloy (Pb-Sn-Ca-Bi alloy) of CA3 in Table 1 is shown in Fig. 2. It is found that the intensity of a diffraction peak A assigned to the (111) plane is very large, and the intensities of diffraction peaks B and C are significantly smaller than that of the diffraction peak A.

The XRD spectrum of the lead alloy (Pb-Sn-Ca-Na-Bi alloy) of A10 in Table 1 is shown in Fig. 3. It is found that the intensities of the diffraction peak B assigned to the (200) plane and the diffraction peak C assigned to the (220) plane are remarkably larger than those of the other peaks.

(2) Preparation of Negative Electrode Plate

Lead oxide, carbon black, barium sulfate, lignin, water, and sulfuric acid were mixed to prepare a negative electrode paste. A mesh portion of an expanded grid made of a Pb-Ca-Sn-based alloy which was a negative current collector was filled with the negative electrode paste, and the negative electrode paste was cured and dried to obtain an unformed negative electrode plate having a width of 100 mm, a height of 110 mm, and a thickness of 1.3 mm.

The amounts of the carbon black, the barium sulfate, and the lignin used were adjusted so that the content of each component in the negative electrode plate taken out from the lead-acid battery in the full charge state was 0.3% by mass, 2.1% by mass, and 0.1% by mass, respectively.

(3) Preparation of Lead-Acid Battery

The unformed negative electrode plate was housed in a bag-shaped separator produced using a polyethylene microporous membrane and stacked with the positive electrode plate, and an element was produced using seven unformed negative electrode plates and six unformed positive electrode plates.

Lug parts of the positive electrode plates and lug portions of the negative electrode plates were welded to a positive electrode shelf and a negative electrode shelf, respectively, by a cast-on strap (COS) method. The elements of six cells were inserted into a polypropylene container, connected in series, and filled with an electrolyte solution, and formation was performed in the container to assemble a flooded-type lead-acid battery having a rated voltage of 12 V and a 5-hour rate capacity of 30 Ah. Here, the 5-hour rate capacity is a capacity at the time of performing discharging at a current (A) which is 1/5 of the numerical value of Ah indicated for the rated capacity.

As the electrolyte solution, an aqueous sulfuric acid solution was used. The density of the electrolyte solution after the formation was 1.285 at 20°C.

The high-temperature overcharge life was evaluated by performing a high-temperature overcharge test by the above-described procedure using the obtained lead-acid battery. Table 1 shows the relative value of the high-temperature overcharge life of each example. The batteries of CA1 to CA10 are Comparative Examples, and the batteries of A1 to A15 are Examples. The relative value is a value when the high-temperature overcharge life of CA2 of Comparative Example is taken as 100.

[Table 1]

| Battery | Content (% by mass) | | | | Ratio | Diffraction peak intensity ratio (%) | | | Life |
|---------|------|------|-------|-------|------------------|----------|---------|---------|------------------|
| | Sn | Ca | Bi | Na | $C_{Bi}/C_{Na}$ | A (111) | B (200) | C (220) | (Relative value) |
| CA1 | 1.5 | 0.04 | 0.010 | 0.000 | - | 94 | 5 | 1 | 98 |
| CA2 | 1.5 | 0.05 | 0.000 | 0.000 | - | 91 | 8 | 1 | 100 |
| CA3 | 1.5 | 0.05 | 0.010 | 0.000 | - | 91 | 8 | 1 | 100 |
| CA4 | 1.5 | 0.05 | 0.020 | 0.000 | - | 91 | 8 | 1 | 100 |
| CA5 | 1.5 | 0.05 | 0.030 | 0.000 | - | 91 | 8 | 1 | 100 |
| CA6 | 1.5 | 0.07 | 0.010 | 0.000 | - | 85 | 14 | 1 | 105 |
| CA7 | 2.0 | 0.05 | 0.010 | 0.000 | - | 93 | 6 | 1 | 108 |
| CA8 | 2.5 | 0.05 | 0.010 | 0.000 | - | 93 | 6 | 1 | 108 |
| CA9 | 1.5 | 0.05 | 0.000 | 0.010 | - | 82 | 17 | 1 | 102 |
| CA10 | 1.5 | 0.05 | 0.000 | 0.030 | - | 64 | 35 | 1 | 105 |

(continued)

| Battery | Content (% by mass) | | | | Ratio | Diffraction peak intensity ratio (%) | | | Life |
|---|---|---|---|---|---|---|---|---|---|
| | Sn | Ca | Bi | Na | $C_{Bi}/C_{Na}$ | A (111) | B (200) | C (220) | (Relative value) |
| A1 | 1.5 | 0.05 | 0.010 | 0.005 | 2 | 76 | 12 | 12 | 110 |
| A2 | 1.5 | 0.05 | 0.020 | 0.005 | 4 | 66 | 11 | 23 | 115 |
| A3 | 1.5 | 0.05 | 0.030 | 0.005 | 6 | 56 | 10 | 34 | 120 |
| A4 | 1.5 | 0.05 | 0.045 | 0.005 | 9 | 41 | 8 | 51 | 130 |
| A5 | 1.5 | 0.05 | 0.050 | 0.005 | 10 | 41 | 8 | 51 | 130 |
| A6 | 1.5 | 0.05 | 0.020 | 0.010 | 2 | 62 | 15 | 23 | 115 |
| A7 | 1.5 | 0.05 | 0.020 | 0.030 | 0.7 | 44 | 33 | 23 | 115 |
| A8 | 1.5 | 0.05 | 0.030 | 0.010 | 3 | 52 | 14 | 34 | 120 |
| A9 | 1.5 | 0.05 | 0.030 | 0.020 | 1.5 | 43 | 23 | 34 | 120 |
| A10 | 1.5 | 0.05 | 0.030 | 0.030 | 1 | 34 | 32 | 34 | 120 |
| A11 | 1.5 | 0.04 | 0.045 | 0.005 | 9 | 44 | 5 | 51 | 125 |
| A12 | 1.5 | 0.07 | 0.045 | 0.005 | 9 | 35 | 14 | 51 | 135 |
| A13 | 1.5 | 0.09 | 0.045 | 0.005 | 9 | 35 | 14 | 51 | 135 |
| A14 | 2.0 | 0.05 | 0.045 | 0.005 | 9 | 43 | 6 | 51 | 130 |
| A15 | 2.5 | 0.05 | 0.045 | 0.005 | 9 | 43 | 6 | 51 | 130 |

From Table 1, it can be understood that the high-temperature overcharge life is significantly improved when the peak C intensity ratio is 10% or more. In addition, it can be understood that the high-temperature overcharge life is improved by a greater extent as the peak C intensity ratio increases to 20% or more and 30% or more.

(Batteries A16 to A25 and CA11 to CA16)

The contents of the components used for the positive current collector other than Pb in the lead alloy were changed to the values shown in Table 2. The peak intensity ratios in the XRD spectrum of the lead alloy measured by the above-described method are shown in Table 2.
The crystallinity A of the bag-shaped separator produced using a polyethylene microporous membrane was changed to the values shown in Table 2.
Batteries A16 to A25 of Examples and batteries CA11 to CA16 of Comparative Examples were prepared and evaluated in a similar manner to the batteries of Table 1 except that the above changes were made. The results are shown in Table 2.

[Table 2]

| Battery | Content (% by mass) | | | | Ratio | Diffraction peak intensity ratio (%) | | | Crystallinity | Life |
|---|---|---|---|---|---|---|---|---|---|---|
| | Sn | Ca | Bi | Na | $C_{Bi}/C_{Na}$ | A (111) | B (200) | C (220) | A | (Relative value) |
| CA11 | 1.5 | 0.05 | 0.000 | 0.000 | - | 91 | 8 | 1 | 16 | 100 |
| CA12 | 1.5 | 0.05 | 0.030 | 0.000 | - | 91 | 8 | 1 | 16 | 100 |
| CA13 | 1.5 | 0.05 | 0.030 | 0.000 | - | 91 | 8 | 1 | 23 | 107 |
| CA14 | 1.5 | 0.05 | 0.030 | 0.000 | - | 91 | 8 | 1 | 18 | 106 |
| CA15 | 1.5 | 0.05 | 0.000 | 0.030 | - | 64 | 35 | 1 | 16 | 105 |
| A16 | 1.5 | 0.05 | 0.010 | 0.005 | 2 | 76 | 12 | 12 | 16 | 110 |
| CA16 | 1.5 | 0.05 | 0.000 | 0.030 | - | 64 | 35 | 1 | 23 | 108 |

(continued)

| Battery | Content (% by mass) | | | | Ratio | Diffraction peak intensity ratio (%) | | | Crystallinity | Life |
|---|---|---|---|---|---|---|---|---|---|---|
| | Sn | Ca | Bi | Na | $C_{Bi}/C_{Na}$ | A (111) | B (200) | C (220) | A | (Relative value) |
| A17 | 1.5 | 0.05 | 0.010 | 0.005 | 2 | 76 | 12 | 12 | 18 | 122 |
| A18 | 1.5 | 0.05 | 0.010 | 0.005 | 2 | 76 | 12 | 12 | 20 | 127 |
| A19 | 1.5 | 0.05 | 0.010 | 0.005 | 2 | 76 | 12 | 12 | 23 | 136 |
| A20 | 1.5 | 0.05 | 0.010 | 0.005 | 2 | 76 | 12 | 12 | 25 | 142 |
| A21 | 1.5 | 0.05 | 0.010 | 0.005 | 2 | 76 | 12 | 12 | 35 | 170 |
| A22 | 1.5 | 0.05 | 0.010 | 0.005 | 2 | 76 | 12 | 12 | 40 | 185 |
| A23 | 1.5 | 0.05 | 0.010 | 0.005 | 2 | 76 | 12 | 12 | 45 | 199 |
| A24 | 1.5 | 0.05 | 0.010 | 0.005 | 2 | 56 | 10 | 34 | 25 | 172 |
| A25 | 1.5 | 0.05 | 0.010 | 0.005 | 2 | 41 | 8 | 51 | 25 | 192 |

In Table 2, when comparing, for example, the batteries CA15 and CA16 in which the peak C intensity ratio of the lead alloy is 1%, the relative value of the high-temperature overcharge life is increased by 2.8% from 105 to 108 due to the crystallinity A of the separator being changed from 16% to 23%. Meanwhile, when comparing the batteries A16 and A19 in which the peak C intensity ratio of the lead alloy is 12%, the relative value of the high-temperature overcharge life is increased by 23.6% from 110 to 136 due to the crystallinity A of the separator being changed from 16% to 23%. From the above, it can be understood that the effect of improving the high-temperature overcharge life by using the separator (S) is significant when the peak C intensity ratio of the lead alloy is 10% or more.

(Batteries A26 to A35 and CA17 to CA22)

The contents of the components used for the positive current collector other than Pb in the lead alloy were changed to the values shown in Table 3. The peak intensity ratios in the XRD spectrum of the lead alloy measured by the above-described method are shown in Table 3.
The peak ratios B of the bag-shaped separator produced using a polyethylene microporous membrane were changed to the values shown in Table 3.
Batteries A26 to A36 of Examples and batteries CA17 to CA22 of Comparative Examples were prepared and evaluated in a similar manner to the batteries of Table 1 except that the above changes were made. The results are shown in Table 3.

[Table 3]

| Battery | Content (% by mass) | | | | Ratio | Diffraction peak intensity ratio (%) | | | Peak ratio | Life |
|---|---|---|---|---|---|---|---|---|---|---|
| | Sn | Ca | Bi | Na | $C_{Bi}/C_{Na}$ | A (111) | B (200) | C (220) | B | (Relative value) |
| CA17 | 1.5 | 0.05 | 0.000 | 0.000 | - | 91 | 8 | 1 | 0.58 | 100 |
| CA18 | 1.5 | 0.05 | 0.020 | 0.000 | - | 91 | 8 | 1 | 0.58 | 100 |
| CA19 | 1.5 | 0.05 | 0.020 | 0.000 | - | 91 | 8 | 1 | 0.70 | 108 |
| CA20 | 1.5 | 0.05 | 0.030 | 0.000 | - | 91 | 8 | 1 | 0. 60 | 106 |
| CA21 | 1.5 | 0.05 | 0.000 | 0.030 | - | 64 | 35 | 1 | 0. 58 | 105 |
| A26 | 1.5 | 0.05 | 0.010 | 0.005 | 2 | 76 | 12 | 12 | 0. 58 | 110 |
| A27 | 1.5 | 0.05 | 0.020 | 0.005 | 4 | 66 | 11 | 23 | 0. 58 | 115 |
| CA22 | 1.5 | 0.05 | 0.000 | 0.030 | - | 64 | 35 | 1 | 0. 70 | 107 |
| A28 | 1.5 | 0.05 | 0.020 | 0.005 | 4 | 66 | 11 | 23 | 0. 60 | 130 |

(continued)

| Battery | Content (% by mass) | | | | Ratio | Diffraction peak intensity ratio (%) | | | Peak ratio | Life |
|---|---|---|---|---|---|---|---|---|---|---|
| | Sn | Ca | Bi | Na | $C_{Bi}/C_{Na}$ | A (111) | B (200) | C (220) | B | (Relative value) |
| A29 | 1.5 | 0.05 | 0.020 | 0.005 | 4 | 66 | 11 | 23 | 0.65 | 140 |
| A30 | 1.5 | 0.05 | 0.020 | 0.005 | 4 | 66 | 11 | 23 | 0.70 | 150 |
| A31 | 1.5 | 0.05 | 0.020 | 0.005 | 4 | 66 | 11 | 23 | 0.75 | 160 |
| A32 | 1.5 | 0.05 | 0.020 | 0.005 | 4 | 66 | 11 | 23 | 0.80 | 170 |
| A33 | 1.5 | 0.05 | 0.020 | 0.005 | 4 | 66 | 11 | 23 | 0.85 | 180 |
| A34 | 1.5 | 0.05 | 0.020 | 0.005 | 4 | 66 | 11 | 23 | 0.90 | 190 |
| A35 | 1.5 | 0.05 | 0.020 | 0.005 | 4 | 56 | 10 | 34 | 0.75 | 190 |
| A36 | 1.5 | 0.05 | 0.020 | 0.005 | 4 | 41 | 8 | 51 | 0.75 | 195 |

In Table 3, when comparing, for example, the batteries CA21 and CA22 in which the peak C intensity ratio of the lead alloy is 1%, the relative value of the high-temperature overcharge life is increased by 1.9% from 105 to 107 as the peak ratio B of the separator is changed from 0.58 to 0.70. Meanwhile, when comparing the batteries A27 and A30 in which the peak C intensity ratio of the lead alloy is 23%, the relative value of the high-temperature overcharge life is increased by 30% or more from 115 to 150 as the peak ratio B of the separator is changed from 0.58 to 0.70. From the above, it can be understood that the effect of improving the high-temperature overcharge life by using the separator (S) is significant when the peak C intensity ratio of the lead alloy is 10% or more.

INDUSTRIAL APPLICABILITY

The present disclosure is particularly applicable to a flooded-type lead-acid battery. The lead-acid battery according to the present disclosure is suitable for a vehicle adopting a start/stop system. The lead-acid battery can also be suitably used for a power supply of an industrial energy storage apparatus such as an electric industrial vehicle (such as a forklift). These applications are merely examples. The applications of the lead-acid battery according to the present invention are not limited to these examples.

DESCRIPTION OF REFERENCE SIGNS

1: lead-acid battery
2: negative electrode plate
3: positive electrode plate
4: separator
5: positive electrode shelf
6: negative electrode shelf
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead alloy for a lead-acid battery, wherein an X-ray diffraction spectrum of the lead alloy includes a diffraction peak A, a diffraction peak B, and a diffraction peak C,

   a peak C intensity ratio is 10% or more, the peak C intensity ratio being represented by
   peak C intensity ratio (%) = 100 × intensity value of the diffraction peak C/(intensity value of the diffraction peak A + intensity value of the diffraction peak B + intensity value of the diffraction peak C), and
   the diffraction peak A is assigned to a (111) plane, the diffraction peak B is assigned to a (200) plane, and the diffraction peak C is assigned to a (220) plane.

2. The lead alloy for a lead-acid battery according to claim 1, wherein, when a CuKa ray is used as an X-ray source in the measurement of the X-ray diffraction spectrum of the lead alloy,

   the diffraction peak A appears at $2\theta$ = 31.12° to 31.42°,
   the diffraction peak B appears at $2\theta$ = 36.11° to 36.41°, and
   the diffraction peak C appears at $2\theta$ = 52.07° to 52.37°.

3. The lead alloy for a lead-acid battery according to claim 1,
   wherein the lead alloy contains Na and Bi.

4. The lead alloy for a lead-acid battery according to claim 3,
   wherein a content $C_{Na}$ of Na contained in the lead alloy is 0.001% by mass or more and 0.03% by mass or less.

5. The lead alloy for a lead-acid battery according to claim 3,
   wherein a content $C_{Bi}$ of Bi contained in the lead alloy is 0.001% by mass or more and 0.05% by mass or less.

6. The lead alloy for a lead-acid battery according to claim 3,
   wherein a ratio of a content $C_{Bi}$ of Bi contained in the lead alloy to a content $C_{Na}$ of Na contained in the lead alloy: $C_{Bi}/C_{Na}$ is 6 or more and 12 or less.

7. The lead alloy for a lead-acid battery according to claim 3,
   wherein the lead alloy contains Sn, and
   a content $C_{Sn}$ of Sn contained in the lead alloy is 1.5% by mass or more and 2.5% by mass or less.

8. The lead alloy for a lead-acid battery according to claim 3,
   wherein the lead alloy contains Ca, and
   a content $C_{Ca}$ of Ca contained in the lead alloy is 0.04% by mass or more and 0.09% by mass or less.

9. A lead-acid battery comprising:

   a positive electrode plate;
   a negative electrode plate; and
   a separator interposed between the positive electrode plate and the negative electrode plate,
   wherein the positive electrode plate includes a positive current collector and a positive electrode material,
   the negative electrode plate includes a negative current collector and a negative electrode material, and
   at least one of the positive current collector and the negative current collector contains the lead alloy according to any one of claims 1 to 6.

10. The lead-acid battery according to claim 9, wherein the separator includes a crystalline region and an amorphous region,

    in an X-ray diffraction spectrum of the separator, crystallinity represented by 100 × $I_c/(I_c + I_a)$ is 18% or more,
    $I_c$ is an integrated intensity of a diffraction peak having a greatest peak height among diffraction peaks corresponding to the crystalline region, and
    $I_a$ is an integrated intensity of a halo corresponding to the amorphous region.

11. The lead-acid battery according to claim 9, wherein a ratio represented by $I_{110}/(I_{110} + I_{200})$ in an X-ray diffraction spectrum of the separator is 0.6 or more,

$I_{100}$ is an integrated intensity of a diffraction peak corresponding to a (110) plane, and
$I_{200}$ is an integrated intensity of a diffraction peak corresponding to a (200) plane.

Fig. 1

Fig. 2

Pb-Sn-Ca-Bi alloy (CA3)

2Θ(deg.)

Fig. 3

Pb-Sn-Ca-Na-Bi alloy (A10)

2Θ(deg.)

## INTERNATIONAL SEARCH REPORT

| International application No. |
|---|
| **PCT/JP2024/002060** |

### A. CLASSIFICATION OF SUBJECT MATTER

*H01M 4/68*(2006.01)i; *H01M 50/489*(2021.01)i

FI: H01M4/68 A; H01M50/489

According to International Patent Classification (IPC) or to both national classification and IPC

### B. FIELDS SEARCHED

Minimum documentation searched (classification system followed by classification symbols)

H01M4/68; H01M50/489

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | JP 2006-66283 A (FURUKAWA BATTERY CO., LTD.) 09 March 2006 (2006-03-09) claims 4, 5, paragraphs [0037], [0042], tables 1, 6, no. 217 | 1-9 |
| Y | | 10-11 |
| Y | WO 2022/255443 A1 (GS YUASA INTERNATIONAL LTD.) 08 December 2022 (2022-12-08) claim 1 | 10 |
| Y | WO 2022/255444 A1 (GS YUASA INTERNATIONAL LTD.) 08 December 2022 (2022-12-08) claims 1, 7 | 11 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 April 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/002060**

| Patent document cited in search report | | | Publication date (day/month/year) | Patent family member(s) | | | Publication date (day/month/year) |
|---|---|---|---|---|---|---|---|
| JP | 2006-66283 | A | 09 March 2006 | (Family: none) | | | |
| WO | 2022/255443 | A1 | 08 December 2022 | JP claim 1 | 2022-186309 | A | |
| | | | | JP | 2022-186311 | A | |
| | | | | JP | 2023-44443 | A | |
| | | | | JP | 2023-46062 | A | |
| WO | 2022/255444 | A1 | 08 December 2022 | JP claims 1, 7 | 2022-186310 | A | |
| | | | | JP | 2022-186312 | A | |
| | | | | JP | 2023-44442 | A | |
| | | | | JP | 2023-46061 | A | |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3036235 B
- JP 11176449 A
- JP 2009199846 A
- JP 5050309 B